# EUROPÄISCHE PATENTSCHRIFT

(11) **EP 2 364 058 B1**
(45) Veröffentlichungstag und Bekanntmachung des Hinweises auf die Patenterteilung: **23.10.2013**
(21) Anmeldenummer: 10155566.2
(22) Anmeldetag: 05.03.2010
(51) Int. Cl.: H05B 7/144, H02M 5/257

(54) **Stromversorgungsanordnung**
Power supply assembly
Agencement d'alimentation en courant

(43) Veröffentlichungstag der Anmeldung: 07.09.2011
(73) Patentinhaber: AEG Power Solutions B.V., 1161 AH Zwanenburg (NL)
(72) Erfinder: Wallmeier, Peter, 59556, Lippstadt (DE)
(74) Vertreter: Basfeld, Rainer

(56) Entgegenhaltungen:
- DE-A1- 2 139 605
- DE-A1- 3 733 077

## Beschreibung

Die vorliegende Erfindung betrifft eine Stromversorgungsanordnung zur Versorgung einer an einem Ausgang der Stromversorgungsanordnung angeschlossenen Last mit einem Rechteckstrom, insbesondere als Stromversorgungsanordnung in einem Lichtbogenofen zur Erzeugung eines Lichtbogens.

Aus dem Stand der Technik sind verschiedene Stromversorgungsanordnungen zur Versorgung eines Lichtbogenofens mit elektrischer Energie bekannt (zum Beispiel DE 3733077). Lichtbogenöfen dienen zum Einschmelzen von Stahlschrott zur erneuten Verwendung als Stahl-Neuprodukt. In Lichtbogenöfen wird elektrische Energie zum Schmelzen von Stahlschrott genutzt. Die Energie wird dabei in thermische Energie umgesetzt, die zum Schmelzen des Stahlschrotts führt. Die durch den zwischen der Elektrode und dem Stahlschrott brennenden Lichtbogen erzeugte Wärme wird hauptsächlich durch Strahlung auf den Stahlschrott übertragen. Beim Wechselstrom-Lichtbogenofen brennen mehrere Lichtbögen zwischen dem Stahlschrott (bzw. der Schmelze) und den Elektrodenspitzen der drei Elektroden.

Ein Transformator einer Stromversorgungsanordnung eines Lichtbogenofens passt die durch ein Versorgungsnetz bereitgestellte Energie den für den Ofenbetrieb notwendigen Strom- und Spannungswerten an. Bei Lichtbogenöfen besteht insbesondere wegen des ungleichmäßigen Brennens des Lichtbogens die Gefahr von unerwünschten Netzrückwirkungen.

Dieses Problem wird durch eine erfindungsgemäße Stromversorgungsanordnung gelöst, die einen Transformator und eine Brückenschaltung aufweist. Der Transformator hat wenigstens zwei primärseitige Anzapfungen, die einen Eingang der Stromversorgungsanordnung bilden. Ferner hat er mehrere sekundärseitige Anzapfungen. Die Brückenschaltung umfasst mehrere erste Halbbrücken, eine zweite Halbbrücke und einen Brückenzweig. Die ersten Halbbrücken weisen Stromrichterventile und je einen ersten Anschluss der Brückenschaltung auf. Die zweite Halbbrücke weist Stromrichterventile und einen zweiten Anschluss der Brückenschaltung auf. Im Brückenzweig ist eine Drossel angeordnet.

Jeder erste Anschluss der Brückenschaltung ist mit einer der sekundärseitigen Anzapfungen des Transformators verbunden. Der zweite Anschluss der Brückeschaltung ist dagegen mit dem Ausgang der Schaltungsanordnung verbunden. Die Brückenschaltung kann auf diese Weise in Reihe mit dem Ausgang der Stromversorgungsanordnung geschaltet sein. Vom Ausgang betrachtet, bildet die Stromversorgungsanordnung eine Stromquelle, die einen Strom durch den zweiten Anschluss der Brückenschaltung liefert. Der Strom ist vorzugsweise rechteckförmig und hat die gleiche Frequenz wie die Spannung am Eingang der Stromversorgungsanordnung. Sofern der zweite Anschluss der Brückenschaltung unmittelbar mit dem Ausgang der Stromversorgungsanordnung verbunden ist, fließt dieser rechteckförmige Strom auch durch den Ausgang der Stromversorgungsanordnung. Es sind aber auch andere Stromverläufe denkbar. Gegebenenfalls weist eine Stromversorgungsanordnung dann aber noch weitere Bauelemente oder Komponenten auf, die zwischen dem zweiten Anschluss der Brückenschaltung und dem Ausgang der Stromversorgungsanordnung angeordnet sein können und den Strom verändern können.

Eine solche Stromversorgungsanordnung kann mittels eines erfindungsgemäßen Verfahrens mit einer am Ausgang angeschlossenen Last so betrieben werden, dass ein Steuermittel die Stromrichterventile der ersten Halbbrücken während einer Netzhalbperiode so auf einander folgend zum Durchschalten ansteuert, dass der Strom durch den Ausgang der Stromversorgungsanordnung in einen abgestuften, an den Verlauf der Netzspannung angenäherten Strom durch den Eingang der Stromversorgungsanordnung übersetzt wird. Die Zahl der möglichen Stufen im eingangsseitigen Strom der Stromversorgungsanordnung richtet sich dabei nach der Anzahl der sekundärseitigen Anzapfungen des Transformators und der damit verbundenen ersten Anschlüsse der Brückenschaltung.

Durch das aufeinander folgende Durchschalten der Stromrichterventile der ersten Halbbrücken und die damit verbundene Auswahl der sekundärseitigen Anzapfung des Transformators kann das Übersetzungsverhältnis des Transformators bestimmt werden. Durch die Wahl des Übersetzungsverhältnisses des Transformators kann der während einer Netzhalbperiode konstante, durch die Drossel im Brückenzweig eingeprägte Strom durch den zweiten Anschluss in einen gewünschten Strom durch den Eingang der Stromversorgungsanordnung transformiert werden. Der Strom durch den Eingang kann dadurch an den Spannungsverlauf der am Eingang der Stromversorgungsanordnung anliegenden Spannung angepasst werden. Dadurch kann ein hoher Leistungsfaktor erreicht werden, da die Oberwelligkeit des Eingangsstroms reduziert werden kann.

Für das Erzielen eines hohen Leistungsfaktors ist es schon ausreichend, wenn es jeweils während der ersten Hälfte einer Netzhalbperiode, das heißt, während des betragsmäßigen Anstiegs der sekundärseitigen Spannung ein aufeinander folgendes Einschalten der Stromrichterventile der ersten Halbbrücken erfolgt. Dafür geeignete Stromrichterventile sind Thyristoren. Es ist ebenso möglich, dass während der zweiten Hälften der Netzhalbperioden, d. h., während der betragsmäßig sinkenden sekundärseitigen Spannung ein aufeinander folgendes Abschalten der Stromrichterventile erfolgt. Dafür geeignete Stromrichterventile sind IGBTs und GTOs. Besonders vorteilhaft ist es, wenn beides erfolgt, nämlich das Einschalten während der ersten Hälften und das Abschalten während der zweiten Hälften der Netzhalbperioden. Auch dafür sind IGBT und GTO geeignet. Ebenso Weiterentwicklungen wie IGCTs u. a.

Die ersten Halbbrücken einer erfindungsgemäßen Stromversorgungsanordnung können zwei Stromrichterventile aufweisen. In jeder ersten Halbbrücke kann eine Anode eines ersten Stromrichterventils der beiden Stromrichterventile und eine Kathode eines zweiten Stromrichterventils der beiden Stromrichterventile mit dem in dieser ersten Halbbrücke angeordneten ersten Anschluss der Brückenschaltung verbunden sein. Die Kathoden der ersten Stromrichterventile der ersten Halbbrücken kann mit einem ersten Knoten der Brückenschaltung verbunden sein und die Anoden der zweiten Stromrichterventile der ersten Halbbrücken kann mit einem zweiten Knoten der Brückenschaltung verbunden sein.

Der Brückenzweig liegt vorteilhaft zwischen dem ersten Knoten und dem zweiten Knoten.

Die zweite Halbbrücke einer erfindungsgemäßen Stromversorgungsanordnung kann zwei Stromrichterventile aufweisen. Jeweils ein erstes Stromrichterventil der beiden Stromrichterventile kann mit seiner Anode und ein zweites Stromrichterventil der beiden Stromrichterventile kann mit seiner Kathode mit dem zweiten Anschluss der Brückenschaltung verbunden sein. Die Kathode des ersten Stromrichterventils der zweiten Halbbrücke kann mit dem ersten Knoten der Brückenschaltung verbunden sein und die Anode des zweiten Stromrichterventils der zweiten Halbbrücke kann mit dem zweiten Knoten der Brückenschaltung verbunden sein.

Eine erfindungsgemäße Stromversorgungsanordnung kann wenigstens ein Steuermittel zum Steuern der Stromrichterventile aufweisen.

Das erste Stromrichterventil und das zweite Stromrichterventil der zweiten Halbbrücke werden vorzugsweise im Gegentakt und synchron zu einer am Eingang der Stromversorgungsanordnung anliegenden Wechselspannung zum Durchschalten angesteuert. Die ersten Stromrichterventile der ersten Halbbrücken werden vorzugsweise während einer ersten halben Periode der am Eingang anliegenden Wechselspannung auf einander folgend zum Durchschalten angesteuert und die zweiten Stromrichterventile der ersten Halbbrücken werden vorzugsweise während einer zweiten halben Periode der am Eingang anliegenden Wechselspannung auf einander folgend zum Durchschalten angesteuert.

Dem Steuermittel kann ein Mittel zum Erzeugen von Impulsen zum Durchschalten der Stromrichterventile nachgeordnet sein. Dem Impulserzeugungsmittel können Impulsübertragungsmittel nachgeordnet sein, die mit einer Steuerelektrode der Stromrichterventile verbunden sind.

Bei den Stromrichterventilen handelt es sich vorzugsweise um Thyristoren. Es können aber auch andere steuerbare Schaltelemente, insbesondere andere Leistungshalbleiter verwendet werden.

Ein Lichtbogenofen weist vorteilhaft drei erfindungsgemäße Stromversorgungsanordnungen auf. Die Primärseiten der Transformatoren der Stromversorgungsanordnungen sind vorteilhaft im Dreieck geschaltet und am Ausgang jeder Stromversorgungseinrichtung ist eine Elektrode des Lichtbogenofens angeschlossen. Eine Anordnung aus zwei Lichtbogenöfen kann insgesamt drei erfindungsgemäße Stromversorgungsanordnungen aufweisen, die im Wechsel von den Stromversorgungsanordnungen mit elektrischem Strom versorgt werden.

Weitere Merkmale und Vorteile der vorliegenden Erfindung werden deutlich anhand der nachfolgenden Beschreibung eines Ausführungsbeispiels unter Bezugnahme auf die beiliegenden Abbildungen. Darin zeigen
- Fig. 1: ein vereinfachtes Schaltbild einer Anordnung mit zwei Lichtbogenöfen mit insgesamt drei Stromversorgungsanordnungen,
- Fig. 2: ein Teil der Anordnung gemäß Fig. 1 mit einer detaillierteren Darstellung einer Brückenschaltung einer der drei Stromversorgungsanordnungen und
- Fig. 3: den Verlauf des Stroms durch den Eingang, des Stroms durch den Ausgang und der Spannung am Eingang einer der Stromversorgungsanordnungen in schematischer Darstellung.

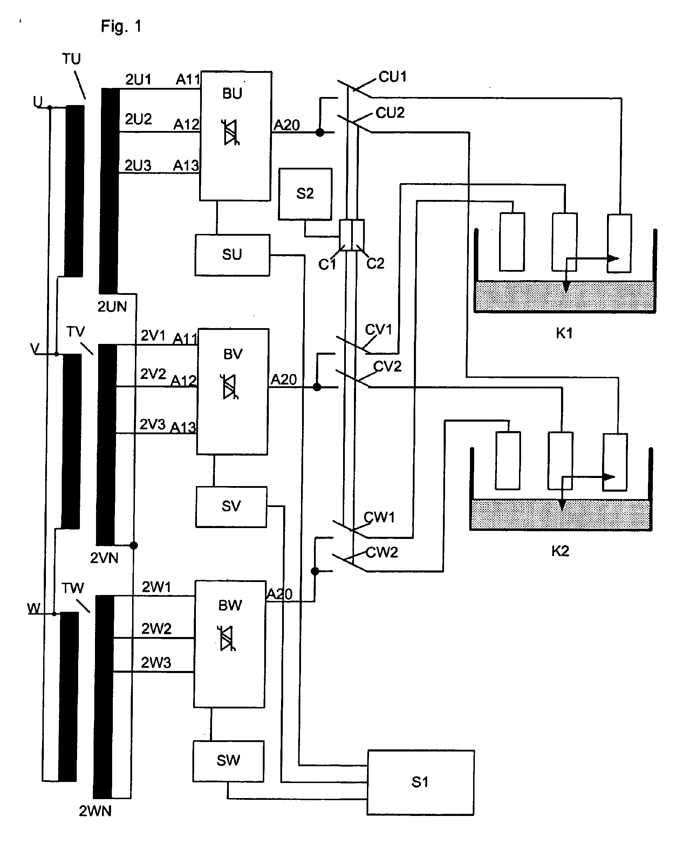

Figur 1 zeigt drei Transformatoren TU, TV, TW, die primärseitig in Dreiecksschaltung an drei Phasenleiter U, V, W eines Drehstromversorgungsnetzes angeschlossen sind. Sekundärseitig sind die Transformatoren TU, TV, TW in Sternschaltung angeordnet. Dazu sind sekundärseitige Anzapfungen 2UN, 2VN, 2WN der Transformatoren TU, TV, TW miteinander verbunden.

Neben den sekundärseitigen Anzapfungen 2UN, 2VN, 2WN weisen die Sekundärseiten der Transformatoren TU, TV, TW drei weitere Anzapfungen 2U1, 2U2, 2U3, 2V1, 2V2, 2V3, 2W1, 2W2, 2W3 auf. Diese sekundärseitigen Anzapfungen 2U1 , 2U2, 2U3, 2V1 , 2V2, 2V3, 2W1, 2W2, 2W3 sind mit Brückenschaltungen BU, BV, BW verbunden und zwar die sekundärseitigen Anzapfungen des Transformators TU mit der Brückenschaltung BU, die sekundärseitigen Anzapfungen des Transformators TV mit der Brückenschaltung BV und die sekundärseitigen Anzapfungen des Transformators TW mit der Brückenschaltung BW. Die Brückenschaltungen BU, BV, BW umfassen eine Reihe von Thyristoren und sind identisch aufgebaut.

Die Brückenschaltungen weisen Ausgänge A20 auf, die unter Zwischenschaltung von zwei Schützen C1 , C2 mit Schaltkontakten CU1, CU2, CV1, CV2, CW1, CW2 mit Elektroden der Lichtbogenöfen K1 , K2 verbunden sind. Die Schütze C1 , C2 werden von einer Steuerung S2 angesteuert, wobei durch die Steuerung S2 sichergestellt ist, dass die Lichtbogenöfen nicht gleichzeitig betrieben werden können.

Zum Steuern von Stromrichterventilen der Brückenschaltungen BU, BV, BW sind den Brückenschaltungen BU, BV, BW zugeordnete Steuerungen SU, SV, SW und eine übergeordnete Steuerung S1 vorgesehen.

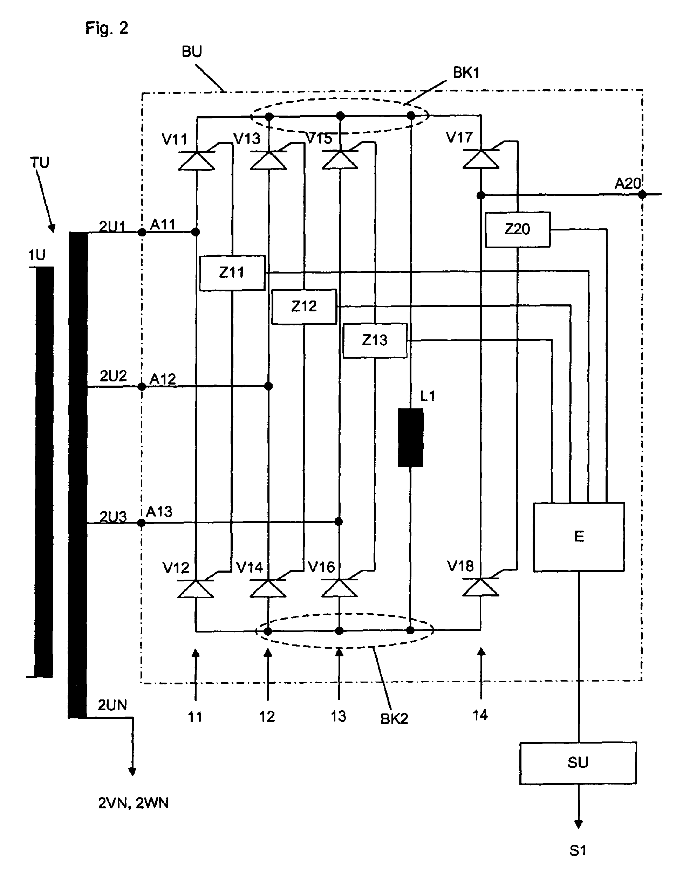

Beispielhaft wird die Brückenschaltung BU anhand von Figur 2 näher erläutert:
Die Brückenschaltung BU weist drei erste Halbbrücken 1 1 , 12, 13 auf, die vorzugsweise identisch aufgebaut sind. Jede erste Halbbrücke 1 1 , 12, 13 weist einen ersten ein- und abschaltbaren Thyristor V11, V13, V15 und einen zweiten ein- und abschaltbaren Thyristor V12, V14, V16 als Stromrichterventil auf. Die Kathoden der ersten Thyristoren V11, V13, V15 sind an einem ersten Knoten BK1 miteinander verbunden und die Anoden der zweiten Thyristoren V12, V14, V16 sind an einem zweiten Knoten BK2 miteinander verbunden. Ferner ist in jedem Brückenzweig 1 1 , 12, 13 die Anode des ersten Thyristors und die Kathode des zweiten Thyristors mit je einem ersten Anschluss A11, A12, A13 der Brückenschaltung verbunden.

Die ersten Anschlüsse A11, A12, A13 der Brückenschaltung BU sind mit je einer sekundärseitigen Anzapfung 2U1, 2U2, 2U3 des Transformators TU verbunden. Die entsprechenden ersten Anschlüsse der A11 , A12, A13 der Brückenschaltungen BV, BW sind mit den entsprechenden sekundärseitigen Anzapfungen 2V1 , 2V2, 2V3, 2W1, 2W2, 2W3 des Transformators TV, TW verbunden.

Der Brückenzweig verbindet den ersten Knoten BK1 und den zweiten Knoten BK2. Er umfasst eine Drossel L1. Aufgrund ihrer Induktivität treibt die Drossel im Betrieb der Stromversorgungsanordnung einen Strom durch den Brückenzweig.

Die zweite Halbbrücke 14 weist einen ersten Thyristor V17 und einen zweiten Thyristor V18 als Stromrichterventile auf. Es ist ausreichend, wenn es sich bei diesen Thyristoren um nur einschaltbare Thyristoren handelt. Die Kathode des ersten Thyristors V17 ist mit dem ersten Knoten BK1 verbunden. Die Anode dieses Thyristors V17 ist mit einem zweiten Anschluss A20 verbunden, der mit dem Ausgang A der Stromversorgungsanordnung verbunden ist. Die Kathode des zweiten Thyristors V18 ist ebenfalls mit dem zweiten Anschluss A20 verbunden, während die Anode des zweiten Thyristors mit dem zweiten Knoten BK2 verbunden ist.

Über den Transformator TU kann die Brückschaltung BU elektrische Energie aus der Phase U des Versorgungsnetzes entnehmen. Das Versorgungsnetz hat eine eingeprägte Spannung. Der Strom durch den Eingang der Stromversorgungsanordnung wird dagegen durch den Strom durch die Sekundärspule des Transformators vorgegeben. Der Strom durch die Sekundärspule des Transformators TU entspricht dem Laststrom durch den Ausgang der Stromversorgungsanordnung. Er kann nur fließen, wenn entweder einer der ersten Thyristoren V11,

V13, V15 der ersten Halbbrücken 1 1 , 12, 13 und der zweite Thyristor V18 oder einer der zweiten Thyristoren V12, V14, V16 der ersten Halbbrücken 1 1 , 12, 13 und der erste Thyristor V17 der zweiten Halbbrücke leitend sind.

Die Eingangsspannung der Stromversorgungsanordnung wird durch den Transformator TU auf die Sekundärseite transformiert. Es fällt dann eine Spannung zwischen einer der sekundärseitigen Anzapfungen 2U1, 2U2, 2U3 des Transformators TU und der sekundärseitigen Anzapfung 2UN ab. Diese sekundärseitige Spannung fällt ebenso über einen der ersten Anschlüsse A11 , A12, A13, einen der Thyristoren V11 , V12, V13, V14, V15, V16, den Brückenzweig mit der Drossel L1 und einen der Thyristoren V17, V18 der zweiten Halbbrücke 20, den Anschluss A20 bzw. dem Ausgang A der Stromversorgungsanordnung, und der Last ab und treibt den sekundärseitigen Strom, d.h. den Lastrom. Der Laststrom wird durch die Drossel L1 bestimmt, die während des Betriebes ohne Unterbrechung stromdurchflossen ist. Die Drossel L1 kann daher als ideale Stromquelle angesehen werden.

Die Thyristoren V17, V18 der zweiten Halbbrücke werden im Gegentakt netzsynchron betrieben. Der Strom der idealen Stromquelle durch die zweite Halbbrücke und durch den Ausgang A erhält dadurch eine Rechteckform.

Durch eine Ansteuerung der Thyristoren V11, V12, V13, V14, V15, V16 kann der den Sekundärstrom führende erste Brückenzweig bestimmt werden. Dadurch wird auch die sekundärseitige Anzapfung 2U1, 2U2, 2U3 bestimmt, die den Sekundärstrom führt. Mit der Auswahl der Anzapfung 2U1, 2U2, 2U3 wird zugleich das Übersetzungsverhältnis bestimmt, das den Sekundärstrom auf die Primärseite transformiert. Damit ist durch die Auswahl des stromführenden ersten Brückenzweiges ein Einstellen des Primärstroms des Transformators möglich.

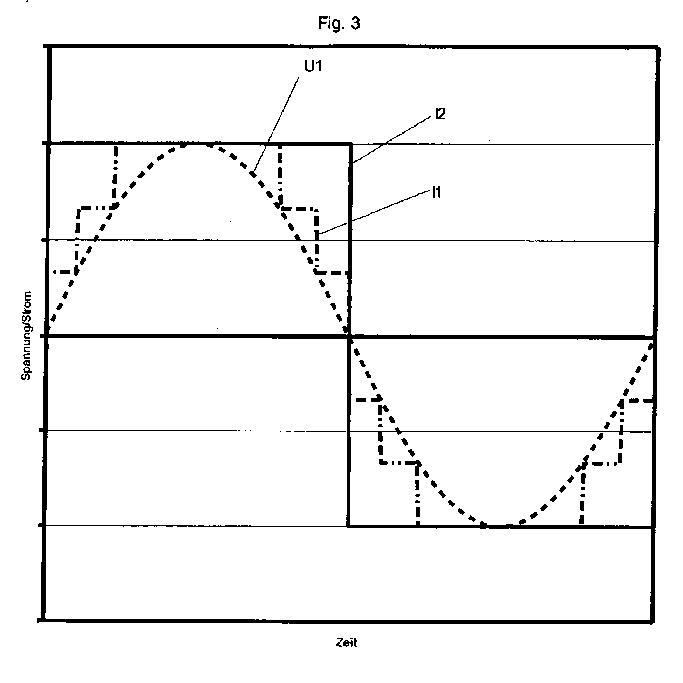

Durch die Möglichkeit den Primärstrom einstellen zu können, kann man primärseitig einen Strom einstellen, der bei der vorgegebenen Primärspannung zu einem möglichst hohem Leistungsfaktor führt. Dieses wird bei einer sinusförmigen Primärspannung U1 dadurch erreicht, dass der Primärstrom I1 durch die Auswahl des stromführenden ersten Brückenzweiges einem Sinusverlauf angenähert wird, wodurch sich der Oberwellenanteil vermindert. Dieses ist in Figur 3 dargestellt, in welcher auch der Sekundärstrom I2 dargestellt ist.

Werden anstelle von ein- und abschaltbaren Thyristoren in den ersten Brückenzweigen nur einschaltbare Thyristoren verwendet, könnte für den Primärstrom nur in den jeweils ersten Hälften einer Netzhalbperiode ein abgestufter Stromverlauf erreicht werden. In der zweiten Hälfte hätte man dann den Strom, der man bei Erreichen der Scheitelpunkte der Spannung eingestellt hat.

## Patentansprüche

1. Stromversorgungsanordnung zur Versorgung einer an einem Ausgang der Stromversorgungsanordnung angeschlossenen Last mit einem Rechteckstrom (12), insbesondere als Stromversorgungsanordnung in einem Lichtbogenofen zur Erzeugung eines Lichtbogens umfassend
- einen Transformator (TU)
- mit wenigstens zwei primärseitigen Anzapfungen (1 U1, 1 U2), die einen Eingang der Stromversorgungsanordnung bilden, und
- mit mehreren sekundärseitigen Anzapfungen (2U1, 2U2, 2U3, 2UN),
**gekennzeichnet durch**:
- eine Brückenschaltung (BU)
- mit mehreren ersten Halbbrücken (11, 12, 13), die Stromrichterventile (V11, V12, V13, V14, V15, V16) und je einen ersten Anschluss (A11, A12, A13) der Brückenschaltung aufweisen,
- mit einem Brückenzweig mit einer Drossel (L1) und
- mit einer zweiten Halbbrücke (14), die Stromrichterventile (V17, V18) und einen zweiten Anschluss (A20) der Brückenschaltung (BU) aufweist,
- wobei jeder erste Anschluss (A11, A12, A13) mit einer der sekundärseitigen Anzapfungen (2U1, 2U2, 2U3) des Transformators (TU) verbunden ist,
- wobei der zweite Anschluss (A20) mit dem Ausgang verbunden ist.

2. Stromversorgungsanordnung nach Anspruch 1, **dadurch gekennzeichnet, dass** die ersten Halbbrücken (11, 12, 13) zwei Stromrichterventile (V11, V12; V13, V14; V15, V16) aufweisen, wobei in jeder ersten Halbbrücke eine Anode eines ersten Stromrichterventils (V11, V13, V15) der beiden Stromrichterventile und eine Kathode eines zweiten Stromrichterventils (V12, V14, V16) der beiden Stromrichterventile mit dem in dieser ersten Halbbrücke angeordneten ersten Anschluss (A11, A12, A13) der Brückenschaltung (BU) verbunden ist.

3. Stromversorgungsanordnung nach Anspruch 2, **dadurch gekennzeichnet, dass** die Kathoden der ersten Stromrichterventile (V11, V13, V15) der ersten Halbbrücken (11, 12, 13) mit einem ersten Knoten (BK1) der Brückenschaltung verbunden sind und die Anoden der zweiten Stromrichterventile (V12, V14, V16) der ersten Halbbrücken (11, 12, 13) mit einem zweiten Knoten (BK2) der Brückenschaltung (BU) verbunden sind.

4. Stromversorgungsanordnung nach Anspruch 3, **dadurch gekennzeichnet, dass** der Brückenzweig zwischen dem ersten Knoten (BK1) und dem zweiten Knoten (BK2) liegt.

5. Stromversorgungsanordnung nach einem der Ansprüche 1 bis 4, **dadurch gekennzeichnet, dass** die zweite Halbbrücke (14) zwei Stromrichterventile (V17, V18) aufweist, wobei jeweils ein erstes Stromrichterventil (V17) der beiden Stromrichterventile (V17, V18) mit seiner Anode und ein zweites Stromrichterventil (V18) der beiden Stromrichterventile (V17, V18) mit seiner Kathode mit dem zweiten Anschluss (A20) der Brückenschaltung (BU) verbunden ist.

6. Stromversorgungsanordnung nach Anspruch 5, **dadurch gekennzeichnet, dass** die Kathode des ersten Stromrichterventils (V17) der zweiten Halbbrücke (14) mit dem ersten Knoten (BK1) der Brückenschaltung (BU) verbunden ist und die Anoden des zweiten Stromrichterventils (V18) der zweiten Halbbrücke (20) mit dem zweiten Knoten (BK2) der Brückenschaltung (BU) verbunden ist.

7. Stromversorgungsanordnung nach einem der Ansprüche 1 bis 6, **dadurch gekennzeichnet, dass** die Stromversorgungsanordnung wenigstens ein Steuermittel (S2) zum Steuern der Stromrichterventile (V11, V12, V13, V14, V15, V16) aufweist.

8. Stromversorgungsanordnung nach Anspruch 7, **dadurch gekennzeichnet, dass** das erste Stromrichterventil (V17) und das zweite Stromrichterventil (V18) der zweiten Halbbrücke (14) im Gegentakt und synchron zu einer am Eingang (U, V) der Stromversorgungsanordnung anliegenden Wechselspannung zum Durchschalten ansteuerbar sind.

9. Stromversorgungsanordnung nach Anspruch 7 oder 8, **dadurch gekennzeichnet, dass** die ersten Stromrichterventile (V11, V13, V15) der ersten Halbbrücken (11, 12, 13) während einer ersten halben Periode der am Eingang anliegenden Wechselspannung auf einander folgend zum Durchschalten ansteuerbar sind und die zweiten Stromrichterventile (V12, V14, V16) der ersten Halbbrücken (11, 12, 13) während einer zweiten halben Periode der am Eingang anliegenden Wechselspannung auf einander folgend zum Durchschalten ansteuerbar sind.

10. Stromversorgungsanordnung nach einem der Ansprüche 7 bis 9, **dadurch gekennzeichnet, dass** dem Steuermittel (S1) ein Mittel (E) zum Erzeugen von Impulsen zum Durchschalten der Stromrichterventile (V11, V12, V13, V14, V15, V16, V17, V18) nachgeordnet ist.

11. Stromversorgungsanordnung nach Anspruch 10, **dadurch gekennzeichnet, dass** dem Impulserzeugungsmittel (E) Impulsübertragungsmittel Z11, Z12, Z13, Z20) nachgeordnet sind, die mit einer Steuerelektrode der Stromrichterventile (V11, V12, V13, V14, V15, V16, V17, V18) verbunden sind.

12. Lichtbogenofen mit drei Stromversorgungsanordnungen, **dadurch gekennzeichnet, dass** die drei Stromversorgungsanordnungen nach einem der Ansprüche 1 bis 11 ausgebildet sind, die Primärseiten der Transformatoren (TU, TV, TW) im Dreieck geschaltet sind, und dass am Ausgang jeder Stromversorgungseinrichtung eine Elektrode angeschlossen ist, wobei zwischen den Elektroden beim Betreiben des Lichtbogenofens ein Lichtbogen brennt.

13. Anordnung aus zwei Lichtbogenöfen nach Anspruch 12, **dadurch gekennzeichnet, dass** die Lichtbogenöfen im Wechsel von den Stromversorgungsanordnungen mit elektrischem Strom versorgbar sind.

14. Verfahren zum Betreiben einer Stromversorgungsanordnung nach einem der Ansprüche 7 bis 11 mit einer am Ausgang angeschlossenen Last, **dadurch gekennzeichnet, dass** das Steuermittel (S1) die Stromrichterventile (V11, V12, V13, V14, V15, V16) der ersten Halbbrücken (11, 12, 13) so auf einander folgend zum Durchschalten ansteuern, dass der rechteckförmige Verlauf des Stroms (12) durch den Ausgang der Stromversorgungsanordnung in einen abgestuften, an den Verlauf der Eingangsspannung (U1) angenäherten Strom (I1) durch den Eingang der Stromversorgungsanordnung übersetzt wird.

## Claims

1. Power supply arrangement for supplying a squarewave current (12) to a load which is connected to an output of the power supply arrangement, in particular in the form of a power supply arrangement in an arc furnace for generating an arc, comprising
- a transformer (TU)
- having at least two primary-side taps (1U1, 1U2) which form an input of the power supply arrangement, and
- having a plurality of secondary-side taps (2U1, 2U2, 2U3, 2UN),
**characterized by**
- a bridge circuit (BU)
- having a plurality of first half-bridges (11, 12, 13) which have converter valves (V11, V12, V13, V14, V15, V16) and a respective first connection (A11, A12, A13) of the bridge circuit,
- having a bridge arm with an inductor (L1) and
- having a second half-bridge (14) which has converter valves (V17, V18) and a second connection (A20) of the bridge circuit (BU),
- wherein each first connection (A11, A12, A13) is connected to one of the secondary-side taps (2U1, 2U2, 2U3) of the transformer (TU),
- wherein the second connection (A20) is connected to the output.

2. Power supply arrangement according to Claim 1, **characterized in that** the first half-bridges (11, 12, 13) have two converter valves (V11, V12; V13, V14; V15, V16), wherein in each first half-bridge an anode of a first converter valve (V11, V13, V15) of the two converter valves and a cathode of a second converter valve (V12, V14, V16) of the two converter valves are connected to the first connection (A11, A12, A13) of the bridge circuit (BU), which is arranged in this first half-bridge.

3. Power supply arrangement according to Claim 2, **characterized in that** the cathodes of the first converter valves (V11, V13, V15) of the first half-bridges (11, 12, 13) are connected to a first node (BK1) of the bridge circuit, and the anodes of the second converter valves (V12, V14, V16) of the first half-bridges (11, 12, 13) are connected to a second node (BK2) of the bridge circuit (BU).

4. Power supply arrangement according to Claim 3, **characterized in that** the bridge arm is situated between the first node (BK1) and the second node (BK2).

5. Power supply arrangement according to one of Claims 1 to 4, **characterized in that** the second half-bridge (14) has two converter valves (V17, V18), wherein in each case a first converter valve (V17) of the two converter valves (V17, V18) is connected to the second connection (A20) of the bridge circuit (BU) by way of its anode, and a second converter valve (V18) of the two converter valves (V17, V18) is connected to the second connection (A20) of the bridge circuit (BU) by way of its cathode.

6. Power supply arrangement according to Claim 5, **characterized in that** the cathode of the first converter valve (V17) of the second half-bridge (14) is connected to the first node (BK1) of the bridge circuit (BU), and the anode of the second converter valve (V18) of the second half-bridge (20) is connected to the second node (BK2) of the bridge circuit (BU).

7. Power supply arrangement according to one of Claims 1 to 6, **characterized in that** the power supply arrangement has at least one control means (S2) for controlling the converter valves (V11, V12, V13, V14, V15, V16).

8. Power supply arrangement according to Claim 7, **characterized in that** the first converter valve (V17) and the second converter valve (V18) of the second half-bridge (14) can be driven, so as to form a connection, in push-pull fashion and synchronously to an AC voltage which is applied to the input (U, V) of the power supply arrangement.

9. Power supply arrangement according to Claim 7 or 8, **characterized in that** the first converter valves (V11, V13, V15) of the first half-bridges (11, 12, 13) can be driven, so as to form a connection, in succession over a first half-period of the AC voltage which is applied to the input, and the second converter valves (V12, V14, V16) of the first half-bridges (11, 12, 13) can be driven, so as to form a connection, in succession over a second half-period of the AC voltage which is applied to the input.

10. Power supply arrangement according to one of Claims 7 to 9, **characterized in that** a means (E) for generating pulses for connecting the converter valves (V11, V12, V13, V14, V15, V16, V17, V18) is arranged downstream of the control means (S1).

11. Power supply arrangement according to Claim 10, **characterized in that** pulse-transmitting means (Z11, Z12, Z13, Z20) are arranged downstream of the pulse-generating means (E), the said pulse-transmitting means being connected to a control electrode of the converter valves (V11, V12, V13, V14, V15, V16, V17, V18).

12. Arc furnace having three power supply arrangements, **characterized in that** the three power supply arrangements are designed in accordance with one of Claims 1 to 11, the primary sides of the transformers (TU, TV, TW) are connected in delta, and **in that** an electrode is connected to the output of each power supply device, wherein an arc burns between the electrodes during operation of the arc furnace.

13. Arrangement comprising two arc furnaces according to Claim 12, **characterized in that** the arc furnaces can be supplied with electric current by the power supply arrangements alternately.

14. Method for operating a power supply arrangement according to one of Claims 7 to 11 having a load which is connected to the output, **characterized in that** the control means (S1) drive the converter valves (V11, V12, V13, V14, V15, V16) of the first half-bridges (11, 12, 13), so as to form a connection, in succession such that the rectangular profile of the current (12) through the output of the power supply arrangement is converted into a stepped current (11) through the input of the power supply arrangement, the said current approximating the profile of the input voltage (U1).

## Revendications

1. Dispositif d'alimentation électrique destiné à alimenter une charge raccordée à une sortie du dispositif d'alimentation électrique avec un courant rectangulaire (I2), notamment en tant que dispositif d'alimentation électrique dans un four à arc afin de générer un arc, comprenant :
- un transformateur (TU) présentant
- au moins deux dérivations côté primaire (1U1, 1U2) formant une entrée du dispositif d'alimentation électrique, et
- une pluralité de dérivations côté secondaire (2U1, 2U2, 2U3, 2UN),
**caractérisé par** :
- un circuit en pont (BU) présentant
- une pluralité de premiers demi-ponts (11, 12, 13) qui comprennent des valves de convertisseur de courant (V11, V12, V13, V14, V15, V16) et une première borne respective (A11, A12, A13) du circuit en pont,
- une branche de pont comportant une inductance (L1) et
- un second demi-pont (14) qui comprend des valves de convertisseur de courant (V17, V18) et une seconde borne (A20) du circuit en pont (BU),
- chaque première borne (A11, A12, A13) étant connectée à l'une des dérivations côté secondaire (2U1, 2U2, 2U3) du transformateur (TU),
- la seconde borne (A20) étant connectée à la sortie.

2. Dispositif d'alimentation électrique selon la revendication 1, **caractérisé en ce que** les premiers demi-ponts (11, 12, 13) comprennent deux valves de convertisseur de courant (V11, V12 ; V13, V14 ; V15, V16), dans chaque premier demi-pont, une anode d'une première valve de convertisseur de courant (V11, V13, V15) des deux valves de convertisseur de courant et une cathode d'une seconde valve de convertisseur de courant (V12, V14, V16) des deux valves de convertisseur de courant étant connectées à la première borne (A11, A12, A13) disposée dans ce premier demi-pont du circuit en pont (BU).

3. Dispositif d'alimentation électrique selon la revendication 2, **caractérisé en ce que** les cathodes des premières valves de convertisseur de courant (V11, V13, V15) des premiers demi-ponts (11, 12, 13) sont connectées à un premier noeud (BK1) du circuit en pont et les anodes des secondes valves de convertisseur de courant (V12, V14, V16) des premiers demi-ponts (11, 12, 13) sont connectées à un second noeud (BK2) du circuit en pont (BU).

4. Dispositif d'alimentation électrique selon la revendication 3, **caractérisé en ce que** la branche de pont se situe entre le premier noeud (BK1) et le second noeud (BK2).

5. Dispositif d'alimentation électrique selon l'une quelconque des revendication 1 à 4, **caractérisé en ce que** le second demi-pont (14) comprend deux valves de convertisseur de courant (V17, V18), une première valve de convertisseur de courant (V17) des deux valves de convertisseur de courant (V17, V18) étant connectée par son anode et une seconde valve de convertisseur de courant (V18) des deux valves de convertisseur de courant (V17, V18) étant connectée par sa cathode, respectivement, à la seconde borne (A20) du circuit en pont (BU).

6. Dispositif d'alimentation électrique selon la revendication 5, **caractérisé en ce que** la cathode de la première valve de convertisseur de courant (V17) du second demi-pont (14) est connectée au premier noeud (BK1) du circuit en pont (BU) et **en ce que** l'anode de la seconde valve de convertisseur de courant (V18) du second demi-pont (20) est connectée au second noeud (BK2) du circuit en pont (BU).

7. Dispositif d'alimentation électrique selon l'une quelconque des revendication 1 à 6, **caractérisé en ce que** le dispositif d'alimentation électrique comprend au moins un moyen de commande (S2) destiné à commander les valves de convertisseur de courant (V11, V12, V13, V14, V15, V16).

8. Dispositif d'alimentation électrique selon la revendication 7, **caractérisé en ce que** la première valve de convertisseur de courant (V17) et la seconde valve de convertisseur de courant (V18) du second demi-pont (14) peuvent être commandées afin qu'elles deviennent passantes de manière équilibrée et en synchronisme par rapport à une tension alternative appliquée à l'entrée (U, V) du dispositif d'alimentation électrique.

9. Dispositif d'alimentation électrique selon la revendication 7 ou 8, **caractérisé en ce que** les premières valves de convertisseur de courant (V11, V13, V15) des premiers demi-ponts (11, 12, 13) peuvent être commandées afin qu'elles deviennent passantes l'une après l'autre pendant une première demi-période de la tension alternative appliquée à l'entrée et **en ce que** les secondes valves de convertisseur de courant (V12, V14, V16) des premiers demi-ponts (11, 12, 13) peuvent être commandées afin qu'elles deviennent passantes l'une après l'autre pendant une seconde demi-période de la tension alternative appliquée à l'entrée.

10. Dispositif d'alimentation électrique selon l'une quelconque des revendications 7 à 9, **caractérisé en ce que** le moyen de commande (S1) est disposé en aval d'un moyen (E) destiné à générer des impulsions de passage à l'état passant des valves de convertisseur de courant (V11, V12, V13, V14, V15, V16, V17, V18).

11. Dispositif d'alimentation électrique selon la revendication 10, **caractérisé en ce qu'**en aval du moyen générateur d'impulsions (E) sont disposés des moyens de transmission d'impulsions (Z11, Z12, Z13, Z20) qui sont connectés à une électrode de commande des valves de convertisseur de courant (V11, V12, V13, V14, V15, V16, V17, V18).

12. Four à arc comportant trois dispositifs d'alimentation électrique, **caractérisé en ce que** les trois dispositifs d'alimentation électrique sont réalisés conformément à l'une quelconque des revendications 1 à 11, **en ce que** les côtés primaires des transformateurs (TU, TV, TW) sont connectés en triangle, et **en ce qu'**une électrode est raccordée à la sortie de chaque dispositif d'alimentation électrique, un arc électrique se formant entre les électrodes lors du fonctionnement du four à arc.

13. Dispositif constitué de deux fours à arc selon la revendication 12, **caractérisé en ce que** les fours à arc peuvent être alimentés en alternance en courant électrique par les dispositifs d'alimentation électrique.

14. Procédé de mise en fonctionnement d'un dispositif d'alimentation électrique selon l'une quelconque des revendications 7 à 11, comportant une charge raccordée à la sortie, **caractérisé en ce que** le moyen de commande (S1) commande les valves de convertisseur de courant (V11, V12, V13, V14, V15, V16) des premiers demi-ponts (11, 12, 13) afin qu'elles soient rendues passantes l'une après l'autre de telle manière que la forme d'onde rectangulaire du courant (12) passant à travers la sortie du dispositif d'alimentation électrique se traduise par un courant (I1) passant à travers l'entrée du dispositif d'alimentation électrique, qui soit échelonné et ait une forme d'onde proche de celle de la tension d'entrée (U1).
